# EUROPEAN PATENT APPLICATION

(11) **EP 4 586 378 A1**
(43) Date of publication of application: **16.07.2025**
(21) Application number: 24217728.5
(22) Date of filing: 05.12.2024
(51) Int. Cl.: H01M 50/204, H01M 50/251, H01M 50/264

(54) **FRAME STRUCTURE AND ENERGY STORAGE SYSTEM**

(30) Priority: 02.01.2024 CN 202420007723 U; 19.03.2024 WO PCT/CN2024/082489
(71) Applicant: Eve Energy Storage Co., Ltd, Wuhan, Hubei 430000 (CN)
(72) Inventor: ZHOU, Chenhao, Wuhan, 430000 (CN); XIANG, Jian, Wuhan, 430000 (CN); ZHAO, Zihui, Wuhan, 430000 (CN); YI, Haohao, Wuhan, 430000 (CN)
(74) Representative: HGF

(57) **Abstract**

Provided are a frame structure and an energy storage system, which relates to the field of energy storage devices. The frame structure includes an outer frame body (1) and a battery rack (2) disposed within the outer frame body (1). The battery rack (2) includes at least two supporting frames (21). A flexible fixing member (3) and a battery bracket (22) for bearing a battery are disposed between two adjacent supporting frames (21). One end of the flexible fixing member (3) is connected to a top frame (11) of the outer frame body (1), a middle portion of each battery bracket (22) is provided with a through hole (221), and another end of the flexible fixing member (3), e.g. steel rope, extends in a vertical direction (z) through the through hole (221). A periphery of the flexible fixing member (3) is provided with a supporting member (4) which carries the battery bracket (22).

## Description

### TECHNICAL FIELD

The present disclosure relates to the field of energy storage devices, for example, to a frame structure and an energy storage system.

### BACKGROUND

The energy storage container is an integrated energy storage system developed according to the requirements of the mobile energy storage market. A current energy storage container mainly includes a box body and a battery rack disposed within the box body. The box body includes an outer plate and a frame disposed on an inner wall of the outer plate. The battery rack mainly includes multiple supporting frames disposed at intervals. A top end of the supporting frame is connected to a top frame of the frame, and a bottom end of the supporting frame is connected to a bottom frame of the frame. A bracket for supporting a battery is disposed between two adjacent supporting frames. The frame structure is mainly used to support an edge portion of the battery through the supporting frame. A portion of the bracket except the edge portion is in a suspended state, and a middle position of the bracket is farther away from the supporting position of the supporting frame. Therefore, the bearing force of the middle position of the bracket is relatively poor, and thus, this middle position is easy to be collapsed and damaged. Generally, multiple upright posts are further arranged in the middle position of the bracket to support in the middle portion of the bracket through the upright posts, however, the upright posts occupy much space, so that the space utilization rate in the energy storage container is reduced, and a low energy density of the energy storage container is caused. Moreover, the weights of the upright posts are large, so that the weight of the energy storage container is increased.

### SUMMARY

The present disclosure provides a frame structure, which is simple in structure, is capable of supporting a middle portion of a battery bracket while improving a space utilization rate of a box body of an energy storage system, and is light in weight.

The present disclosure provides an energy storage system, which has good structural strength, is light in weight, has high internal space utilization rate, and has a high energy density.

In a first aspect, the present disclosure provides a frame structure. The frame structure is disposed within a box body of an energy storage system. The frame structure includes an outer frame body and a battery rack disposed within the outer frame body. The battery rack includes at least two supporting frames disposed at intervals in a first direction, a flexible fixing member and a battery bracket for bearing a battery are disposed between two adjacent supporting frames of the at least two supporting frames, one end of the flexible fixing member is connected to a top frame of the outer frame body, a middle portion of each battery bracket is provided with a through hole, another end of the flexible fixing member extends in a second direction through the through hole, the first direction and the second direction are disposed at an included angle, a periphery of the flexible fixing member is provided with a supporting member, and the supporting member is configured to bear the battery bracket at a bottom of the battery bracket.

In a solution of the frame structure, the flexible fixing member is a rope. The supporting member is connected to the flexible fixing member in an anchoring manner or by a fastener; or a knotting point is formed on the flexible fixing member, and the supporting member is sleeved outside the flexible fixing member and abuts above the knotting point.

In a solution of the frame structure, an inner wall of the supporting member is fits against an outer wall of the flexible fixing member, and the inner wall of the supporting member is provided with a concave structure and/or a convex structure for increasing friction.

In a solution of the frame structure, multiple battery brackets disposed at intervals in the second direction are disposed between the two adjacent supporting frames, the flexible fixing member is disposed to pass through each of the multiple battery brackets in sequence, the flexible fixing member is provided with multiple supporting members disposed at intervals in the second direction, and each of the multiple supporting members is configured to support a bottom of a respective one of the multiple battery brackets.

In a solution of the frame structure, at least two groups of battery brackets arranged in a third direction are disposed between two the adjacent supporting frames, and two adjacent groups of battery brackets of the at least two groups of battery brackets are connected through a first upright post.

In a solution of the frame structure, the flexible fixing member separates, in the first direction, a battery bracket of the multiple battery brackets into two accommodation spaces for storing the battery, one side of the battery bracket of the multiple battery brackets in the third direction is provided with an opening communicating with the two accommodation spaces, the opening is used for placing the battery into the two accommodation spaces, a connection hole used for connecting to a screw of the battery is disposed at a battery bracket of the multiple battery brackets is adjacent to an opening hole, a first positioning member is disposed on one side of the battery bracket of the multiple battery brackets facing away from the opening, the first positioning member is used for limiting the battery to move in the third direction, a middle portion of the battery bracket of the multiple battery brackets in the first direction is provided with a second positioning member, and the second positioning member and the supporting frames jointly restrain the battery from moving in the first direction.

In a solution of the frame structure, at least two flexible fixing members arranged at intervals in a third direction are disposed between two adjacent supporting frames, multiple through holes are disposed at intervals on a central line of each battery bracket in the third direction, the at least two flexible fixing members are disposed to pass through the multiple through holes in one-to-one correspondence, the third direction is configured at an included angle relative to the first direction, and the third direction is configured at an included angle relative to the second direction.

In a solution of the frame structure, the outer frame body includes a bottom frame, the bottom frame includes two second longitudinal beams extending in the first direction and a first longitudinal beam extending in the first direction, the first longitudinal beam and the two second longitudinal beams are disposed at intervals in a third direction, the first longitudinal beam is located between the two second longitudinal beams, multiple first transverse beams are connected between the first longitudinal beam and each of the two second longitudinal beams, and the multiple first transverse beams are disposed at intervals in the first direction. Two ends of a supporting frame of the at least two supporting frames are connected to a first transverse beam of the multiple first transverse beams and the top frame of the at least two supporting frames, respectively, a first upright post is also disposed between two adjacent supporting frames, and two ends of the first upright post are connected to the first longitudinal beam and the top frame, respectively.

In a solution of the frame structure, the first longitudinal beam includes a first sub-beam and a second sub-beam located above the first sub-beam, the second sub-beam includes a body, two first connection portions disposed at intervals in the third direction are disposed on a side of the body, a second connection portion are disposed on each side of two sides of the two first connection portions facing away from each other, two second connection portions are both connected to the first sub-beam, and the body is spaced apart from the first sub-beam.

In a second aspect, the present disclosure provides an energy storage system. The energy storage system includes a box body and a battery disposed within the box body. The box body is provided with the frame structure described above, and the battery is mounted on the battery rack of the frame structure.

### BRIEF DESCRIPTION OF DRAWINGS

The present disclosure is explained in more detail below with reference to the drawings and embodiments.
FIG. 1 is a perspective structural diagram of a frame structure according to an embodiment of the present disclosure.
FIG. 2 is a partial structural diagram of a battery rack according to an embodiment of the present disclosure.
FIG. 3 is an assembly diagram of a flexible fixing member and a supporting member according to an embodiment of the present disclosure.
FIG. 4 is a perspective structural diagram of a battery bracket according to an embodiment of the present disclosure.
FIG. 5 is an assembly diagram of an outer frame body and a first upright post according to the embodiment of the present disclosure.
FIG. 6 is a perspective structural diagram of a bottom frame according to an embodiment of the present disclosure.
FIG. 7 is an enlarged view at A in FIG. 6.
FIG. 8 is a structural diagram of an energy storage system according to an embodiment of the present disclosure.

### List of reference numbers

- 1: outer frame body
- 11: top frame
- 111: third longitudinal beam
- 112: second transverse beam
- 113: second reinforcing beam
- 12: bottom frame
- 121: first longitudinal beam

- 1211: first sub-beam
- 1212: second sub-beam
- 1212a: body
- 1212b: first connection portion
- 1212c: second connection portion

- 122: second longitudinal beam
- 123: first transverse beam
- 124: first reinforcing beam
- 13: second upright post
- 2: battery rack
- 21: supporting frame
- 211: third upright post
- 212: third reinforcing beam
- 22: battery bracket
- 221: through hole
- 222: accommodation space
- 223: opening
- 224: connection hole
- 225: first positioning member
- 226: second positioning member
- 227: weight-reducing opening
- 228: reinforcing plate
- 3: flexible fixing member
- 4: supporting member
- 5: first upright post
- 6: box body
- 7: battery

### DETAILED DESCRIPTION

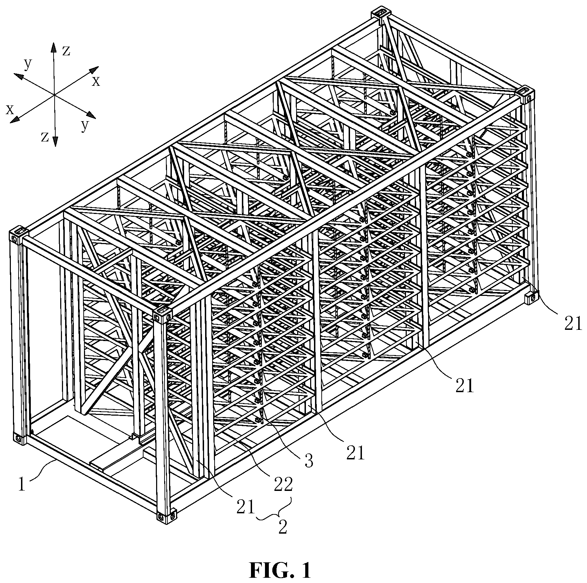

As shown in FIG. 1 to FIG. 4, the present disclosure provides a frame structure, and the frame structure is disposed within a box body of an energy storage system. Specifically, the frame structure includes an outer frame body 1 and a battery rack 2 disposed within the outer frame body 1. The battery rack 2 includes at least two supporting frames 21 disposed at intervals in a first direction (an x direction in the drawings). A flexible fixing member 3 and a battery bracket 22 for bearing a battery are disposed between two adjacent supporting frames 21. One end of the flexible fixing member 3 is connected to a top frame 11 of the outer frame body 1, a middle portion of each battery bracket 22 is provided with a through hole 221, and another end of the flexible fixing member 3 extends in a second direction (a z direction in the drawings) through the through hole 221. A periphery of the flexible fixing member 3 is provided with a supporting member 4. The supporting member 4 is configured to bear the battery bracket at a bottom of the battery bracket 22 to restrict the movement of the battery bracket 22 relative to the flexible fixing member 3. The first direction and the second direction are disposed at an included angle. In this embodiment, the first direction is a horizontal direction, and the second direction is a vertical direction.

It is to be understood that two adjacent supporting frames 21 may be connected to two ends of the battery bracket 22 through screws, separately, to support an edge portion of the battery bracket 22. Moreover, the flexible fixing member 3 includes, but is not limited to, flexible objects with lighter weight and smaller volume such as resin, rubber or rope. The flexible fixing member 3 is disposed to pass through a middle position of the battery bracket 22 and may abut against a position of a middle portion of the bottom of the battery bracket 22 through the supporting member 4, so that the battery bracket 22 may be assisted to be hoisted, thereby supporting the middle position of the battery bracket 22, and thus the middle position of the battery bracket 22 is not easy to be collapsed and damaged. Compared with the manner of supporting the middle position of the battery bracket 22 by further adding an upright post, in the frame structure of the present disclosure, the flexible fixing member 3, which has a smaller weight and occupies less space is cooperated with the supporting member 4, so that the number of used upright posts can be reduced to reduce the overall weight of the frame structure, and further, to reduce the overall weight of the energy storage system, thereby facilitating the hoisting and transportation of the energy storage system. Moreover, the space occupied by the frame structure can also be reduced to improve the interior space utilization rate of the box body of the energy storage system, and further, to increase the energy density of the energy storage system. Furthermore, the flexible fixing member 3 is more convenient to be mounted and may be mounted at a later stage of the assembly of the energy storage system, to provide a larger operation space for mounting other components, thereby making the assembly more convenient.

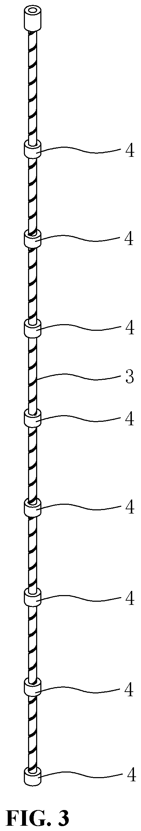

Exemplarily, referring to FIG. 3, the flexible fixing member 3 is a rope, and the rope may be selected from a steel rope or a steel twisted rope. For example, the steel twisted rope is a spiral steel wire strand formed by twisting steel wires satisfying a requirement in terms of mechanical property and geometric dimension according to a certain rule, and the steel twisted rope is composed of a steel wire, a rope core, and grease. The steel twisted rope is formed by firstly twisting multiple layers of steel wires into a strand and by then twisting a certain number of strands into a spiral rope by taking the rope core as a center. The steel twisted rope has high strength, is stable and reliable in operation, can stably hoist the battery bracket and the battery mounted on the battery bracket, and has a light self-weight, which helps to reduce the overall weight of the frame structure.

In an embodiment, the supporting member 4 is connected to the flexible fixing member 3 in an anchoring manner. Exemplarily, the supporting member 4 is provided with a rope-penetrating hole. When the supporting member 4 is mounted on the flexible fixing member 3, the rope-penetrating hole may be expanded and dilated by means of high temperature and other manners, then the flexible fixing member 3 is disposed to pass through the rope-penetrating hole of the supporting member 4, and finally the supporting member 4 is contracted, so that a limiting member is anchored on the flexible fixing member 3. Alternatively, the supporting member 4 is anchored to the flexible fixing member 3 by means of metal liquid or plastic casting.

In another embodiment, the supporting member 4 is connected to the flexible fixing member 3 through a fastener. Exemplarily, the supporting member 4 adopts a hoop structure, the supporting member 4 includes a first arc-shaped portion and a second arc-shaped portion, and the first arc-shaped portion and the second arc-shaped portion may form a round hole adapted to an outer diameter of the flexible fixing member 3 through a bolt connection, so that the supporting member 4 is firmly fixed on the flexible fixing member 3. Alternatively, the fastener is a hoop structure, and the hoop is detachably disposed on the flexible fixing member 3. After the flexible fixing member 3 is disposed to pass through the supporting member 4, the hoop may be sleeved under the supporting member 4 to limit the supporting member 4 and prevent the supporting member 4 from detaching from the flexible fixing member 3, so that the supporting member 4 may be firmly fixed on the flexible fixing member 3.

In another embodiment, a knotting point is disposed on the flexible fixing members 3, the supporting member 4 is sleeved outside the flexible fixing member 3 and abuts above the knotting point. An outline dimension of the knotting point is greater than a dimension of the rope-penetrating hole of the supporting member 4, so that the knotting point may limit the supporting member 4 to be detached from the flexible fixing member 3.

Further, an inner wall of the supporting member 4 (namely, a hole wall of the rope-penetrating hole) fits against an outer wall of the flexible fixing member 3, and the inner wall of the supporting member 4 is provided with a concave structure and/or a convex structure for increasing friction. Both the concave structure and the convex structure enable the inner wall of the supporting member 4 to form a concave-convex anti-slide pattern, to increase the friction force between the supporting member 4 and the flexible fixing member 3, thereby causing the supporting member 4 to be firmly fixed on the flexible fixing member 3. The anti-slide pattern may be a saw-toothed anti-slide pattern or a corrugated anti-slide pattern or other shapes of anti-slide patterns.

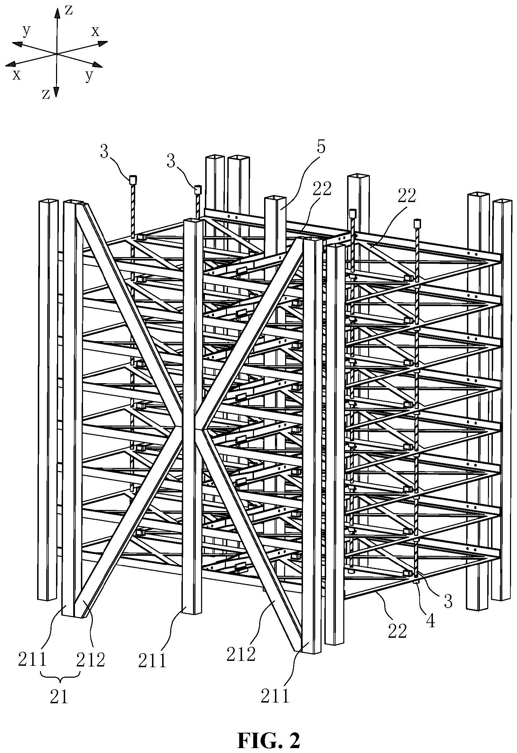

As shown in FIG. 1 and FIG. 2, since two ends of the battery bracket 22 in a third direction (a y direction in the drawing) are not borne or supported by the support structure, this makes the battery bracket 22 more likely to be concave collapsed or broken at the middle position in the first direction. Preferably, at least two flexible fixing members 3 arranged at intervals in the third direction (the y direction in the drawings) are disposed between two adjacent supporting frames 21, multiple through holes 221 for the flexible fixing members 3 to pass through are disposed at intervals on a central line of the battery bracket 22 in the third direction. The multiple through holes 221 are arranged at equal intervals in the third direction, and the flexible fixing members 3 are disposed to pass through the through holes 221 in one-to-one correspondence. The support members 4 on each flexible fixing member 3 are arranged at equal intervals in the third direction to be jointly borne at the bottom of the battery bracket 22. Part of the supporting member 4 with this design may also be borne at a position of two ends of the battery bracket 22 adjacent to the third direction, so that the supporting forces applied to a middle portion of the battery bracket 22 in the first direction are more uniform, and thus, the supporting effect of the middle portion of the battery bracket 22 is improved.

In addition, the third direction is disposed at an included angle relative to the first direction, and the third direction is disposed at an included angle relative to the second direction. In this embodiment, the first direction and the third direction are two mutually perpendicular directions in the horizontal plane, and the second direction is the vertical direction, namely the first direction, the second direction and the third direction are all perpendicular to each other.

In some embodiments, multiple battery brackets 22 disposed at intervals in the second direction are disposed between two adjacent supporting frames 21, the flexible fixing members 3 are disposed to pass through each of the battery brackets 22 in sequence, a flexible fixing member 3 is provided with multiple supporting members 4 disposed at intervals in the second direction, and each of the supporting members 4 is configured to support a bottom of one battery bracket 22. With this design, a space in the vertical direction may be used to dispose the multiple battery brackets 22 for storing the battery, to improve the space utilization rate inside the box body of the energy storage system, and further increase the energy density of the energy storage system.

Further, as shown in FIGS. 1, 2 and 5, multiple battery brackets 22 disposed at intervals in the second direction form a group of battery brackets 22, at least two groups of battery brackets 22 arranged in the third direction are disposed between two adjacent supporting frames 21, and two adjacent groups of battery brackets 22 are connected to each other through a first upright post 5. In this embodiment, one first upright post 5 and two groups of battery bracket brackets 22 arranged in the third direction are disposed between two adjacent supporting frames 21, and opposite sides of the two groups of battery bracket brackets 22 are connected to the first upright post 5. Referring to FIGS. 1 and 2, specifically, middle positions of opposite sides of two groups of battery brackets 22 are disposed concavely, and the opposite sides of the two groups of battery brackets 22 fit against each other except the concavely disposed middle positions, so that an avoiding space for the first upright post 5 to pass through is formed in the concave positions of the opposite sides of the two groups of battery brackets 22, and the first upright post 5 fits against the concave positions of the opposite sides of the battery bracket 22 and is connected to the concave positions by using a screw. The first upright post 5 is provided so that opposite ends of two adjacent groups of battery brackets 22 in the third direction may be supported, and the two groups of battery brackets 22 are connected to form a whole, thereby improving the structural strength of the battery rack 2 as a whole, so that the battery rack 2 is less likely to be damaged.

In some embodiments, the flexible fixing member 3 separates, in the first direction, the battery bracket 22 into two accommodation spaces 222 for storing the battery, one side of the battery bracket 22 in the third direction is provided with an opening 223 communicating with the accommodation spaces 222, and the opening 223 is used for placing the battery into the accommodation spaces 222. Exemplarily, the opening 223 communicating with the accommodation spaces 222 is formed on each side surface of side surfaces facing away from each other of two groups of battery brackets 22, so that the battery may be inserted from the opening 223 on two opposite sides of the battery rack 2 and mounted within the accommodation spaces 222, thereby facilitating the mounting of the battery.

In some embodiments, the battery rack 2 is provided with multiple supporting frames 21 disposed at intervals in the first direction, two adjacent supporting frames 21 are both provided with a flexible fixing member 3 and at least two groups of battery brackets 22 arranged in the third direction, one first upright post 5 is disposed between two adjacent groups of battery brackets 22, each group of battery brackets 22 include multiple battery brackets 22 disposed at intervals in the second direction, and all battery brackets 22 of the same group are hoisted on each flexible fixing member 3 in the vertical direction.

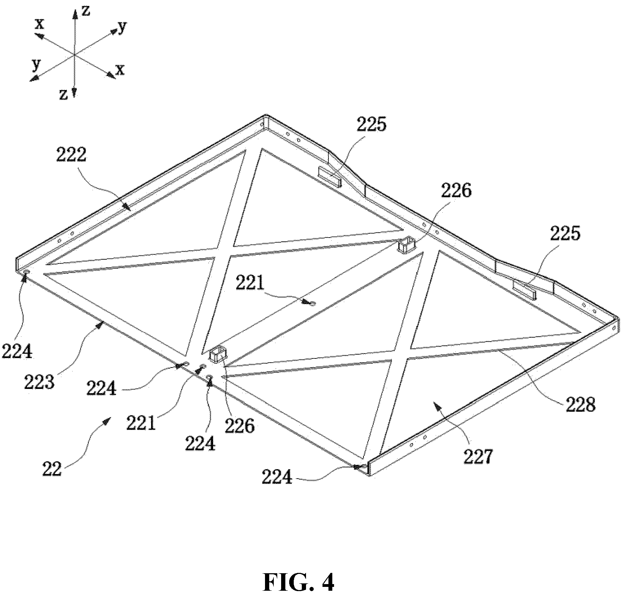

In some embodiments, as shown in FIG. 4, the battery is fixed to the battery bracket 22 through a screw. Exemplarily, a connection hole 224 used for connecting to the battery by using a screw is disposed at a position of the battery bracket 22 adjacent to the opening 223, the battery pack is provided with a fixing hole matching with the connection hole 224, and the screw may be connected to the connection hole 224 via the fixing hole to lock the battery.

Further, a first positioning member 225 is disposed on a side of the battery bracket 22 facing away from the opening 223, the first positioning member 225 is used for limiting the battery to move in the third direction, a second positioning member 226 is disposed in the middle portion of the battery bracket 22 in the first direction, and the second positioning member 226 and the supporting frame 21 jointly restrain the battery from moving in the first direction. It is to be understood that, in a process of inserting the battery from the opening 223 into the accommodation space 222, the second positioning member 226 and the supporting frame 21 may respectively abut against two end surfaces of the battery in the first direction to jointly position an insertion direction of the battery, so that the fixing hole on the battery and the connection hole 224 are arranged on the same straight line in the third direction, and the first positioning piece 225 may abut against the battery to limit the battery to move in the third direction; therefore, the fixing hole and the connection hole 224 can be quickly and accurately aligned, thereby improving the mounting efficiency of the battery.

In some embodiments, the battery bracket 22 is provided with a weight-reducing opening 227 in the second direction that penetrates through the battery bracket 22, and reinforcing plates 228 are disposed within the weight-reducing opening 227 in an intersecting manner. With this design, the weight of the battery bracket 22 can be reduced by using the weight-reducing opening 227, to further reduce the overall weight of the frame structure, moreover, the structural strength of the battery bracket 22 is ensured by using the reinforcing plate 228, so that the battery bracket is not easily damaged.

In some embodiments, the supporting frame 21 includes multiple third upright posts 211 disposed at intervals in the third direction, and a third reinforcing beam 212 is connected between two adjacent third upright posts 211, to improve structural strength of the supporting frame 21.

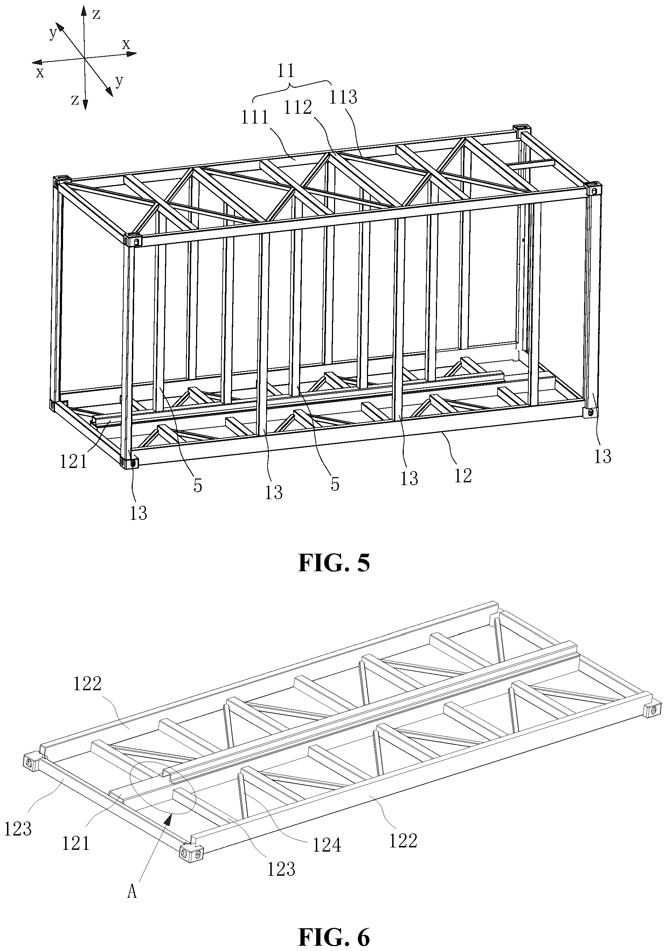

In some embodiments, as shown in FIG. 1 and FIG. 5, the outer frame body 1 includes a top frame 11 and a bottom frame 12, and the top frame 11 and the bottom frame 12 are connected through multiple second upright posts 13.

Further, as shown in FIG. 6, the bottom frame 12 includes two second longitudinal beams 122 and a first longitudinal beam 121 that extend in the first direction, the first longitudinal beam 121 and the second longitudinal beam 122 are disposed at intervals in the third direction, and the first longitudinal beam 121 is located between the two second longitudinal beams 122. Multiple first transverse beams 123 are connected between the first longitudinal beam 121 and the second longitudinal beam 122, and the multiple first transverse beams 123 are disposed at intervals in the first direction. With this design, the structural strength of the bottom frame 12 may be strengthened by disposing the first longitudinal beam 121 in the middle portion of the bottom frame 12, and the first longitudinal beam 121 and the second longitudinal beam 122 may be connected to form a whole by using the multiple first transverse beams 123, to further improve the structural strength of the bottom frame 12, thereby making the structure of the bottom frame 12 not easy to deform and playing the better supporting role.

A bottom end of the first upright post 5 is connected to the first longitudinal beam 121, a top end of the first upright post 5 is connected to the top frame 11, a bottom end of the supporting frame 21 is connected to the first transverse beam 123, and a top end of the supporting frame 21 is connected to the top frame 11. Both the first upright post 5 and the supporting frame 21 may be connected to the outer frame body 1, to connect the outer frame body 1 and the battery rack 2 to form a whole, thereby improving the structural strength of the frame structure as a whole and making the frame structure more stable and reliable.

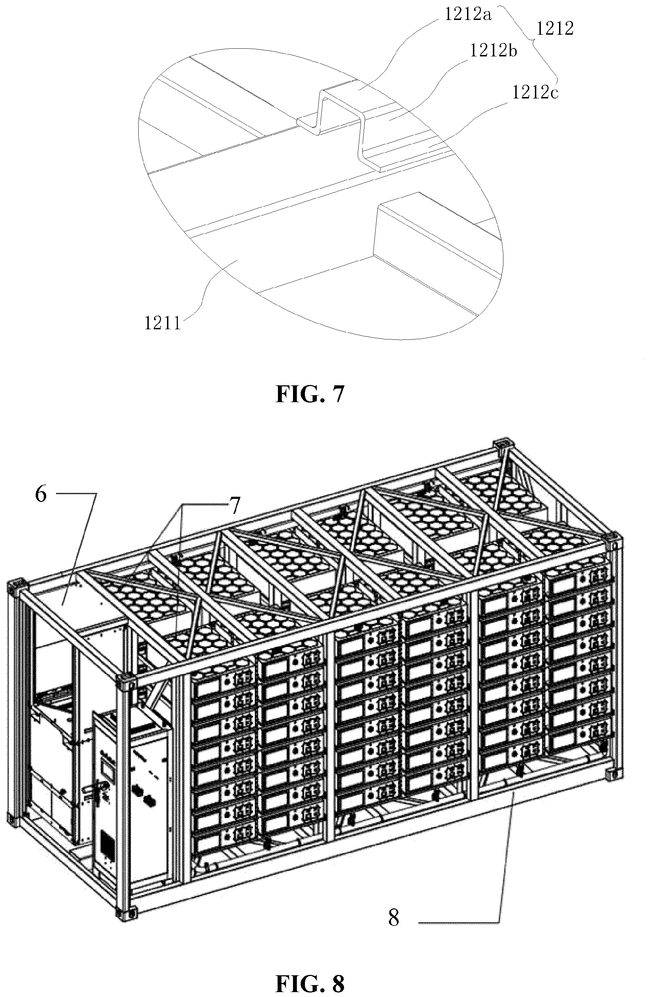

In some embodiments, as shown in FIG. 6 and FIG. 7, the first longitudinal beam 121 includes a first sub-beam 1211 and a second sub-beam 1212 located above the first sub-beam 1211. The second sub-beam 1212 includes a body 1212a. Two first connection portions 1212b disposed at intervals in the third direction are disposed on a side surface of the body 1212a, a second connection portion 1212c is disposed on each side surface of side surfaces facing away from each other of the two first connection portions 1212b, two second connection portions 1212c are both connected to the first sub-beam 1211, and the body 1212a is spaced apart from the first sub-beam 1211. By means of this design, the second sub-beam 1212 can uniformly transfer the bearing force of the first upright post 5 to the first sub-beam 1211, so that the first sub-beam 1211 can resist an overall deformation of the energy storage system in a hoisting working condition, thereby improving the ability of the frame structure to resist the bending deformation.

Further, the bottom frame 12 further includes multiple first reinforcing beams 124, one end of the first reinforcing beam 124 is connected to a connection position of the first longitudinal beam 121 and the first transverse beam 123, another end of the first reinforcing beam 124 is connected to a connection position of the second longitudinal beam 122 and the first transverse beam 123, to further improve the structural strength of the bottom frame 12.

In some embodiments, the top frame 11 includes two third longitudinal beams 111 disposed at intervals in the third direction, a length of the third longitudinal beam 111 extends in the first direction, and multiple second transverse beams 112 disposed at intervals in the first direction are connected between the two third longitudinal beams 111. A hollow structure is formed between the adjacent second transverse beams 112 and the two third longitudinal beams 111 to reduce the overall weight of the top frame 11. Further, a second reinforcing beam 113 is disposed in the hollow structure, and the second reinforcing beam 113 is connected to the adjacent second transverse beams 112 and the two third longitudinal beams 111, to improve the structural strength of the top frame 11 as a whole.

The present disclosure further provides an energy storage system. FIG. 8 is a structural diagram of an energy storage system according to an embodiment of the present disclosure. The energy storage system includes a box body 6 and a battery 7 disposed within the box body 6. The frame structure 8 described in any one of the foregoing embodiments is disposed within the box body 6, the box body 6 includes a peripheral plate, the peripheral plate surrounds an outer side of the outer frame body 1 of the frame structure 8, and the battery 7 is mounted on the battery rack 2 of the frame structure 8. The energy storage system of the present disclosure may use the frame structure with a relatively small weight to improve the internal space utilization rate of the box body, thereby increasing the energy density of the energy storage system. Moreover, the frame structure is light in weight and has a good structural strength, so that the energy storage system is more stable and reliable.

## Claims

1. A frame structure, disposed within a box body (6) of an energy storage system, wherein the frame structure comprises: an outer frame body (1) and a battery rack (2) disposed within the outer frame body (1),
wherein the battery rack (2) comprises at least two supporting frames (21) disposed at intervals in a first direction, a flexible fixing member (3) and a battery bracket (22) for bearing a battery are disposed between two adjacent supporting frames (21) of the at least two supporting frames (21), one end of the flexible fixing member (3) is connected to a top frame (11) of the outer frame body (1), a middle portion of each battery bracket (22) is provided with a through hole (221), another end of the flexible fixing member (3) extends in a second direction through the through hole (221), the first direction and the second direction are configured at an included angle, a periphery of the flexible fixing member (3) is provided with a supporting member (4), and the supporting member (4) is configured to bear the battery bracket (22) at a bottom of the battery bracket (22).

2. The frame structure of claim 1, wherein the flexible fixing member (3) is a rope; and wherein the supporting member (4) is connected to the rope in an anchoring manner or by a fastener; or a knotting point is formed on the rope, and the supporting member (4) is sleeved outside the rope and abuts above the knotting point.

3. The frame structure of claim 2, wherein an inner wall of the supporting member (4) fits against an outer wall of the flexible fixing member (3), and the inner wall of the supporting member (4) is provided with any one or a combination of two of a concave structure and a convex structure for increasing friction.

4. The frame structure of any one of claims 1 to 3, wherein a plurality of battery brackets (22) are disposed at intervals in the second direction and between the two adjacent supporting frames (21), the flexible fixing member (3) is disposed to pass through each of the plurality of battery brackets (22) in sequence, the flexible fixing member (3) is provided with a plurality of supporting members (4) disposed at intervals in the second direction, and each of the plurality of supporting members (4) is configured to support a bottom of a respective one of the plurality of battery brackets (22).

5. The frame structure of claim 4, wherein at least two groups of battery brackets (22) arranged in a third direction are disposed between the two adjacent supporting frames (21), and two adjacent groups of battery brackets (22) of the at least two groups of battery brackets (22) are connected through a first upright post (5).

6. The frame structure of claim 4, wherein the flexible fixing member (3) separates, in the first direction, a battery bracket (22) of the plurality of battery brackets (22) into two accommodation spaces (222) for storing battery (7), one side of the battery bracket (22) of the plurality of battery brackets (22) in a third direction is provided with an opening (223) communicating with the two accommodation spaces (222), the opening (223) is used for placing the battery (7) into the two accommodation spaces (222), a connection hole (224) used for connecting to a screw of the battery (7) is disposed at a battery bracket (22) of the plurality of battery brackets (22) adjacent to the opening (223), a first positioning member (225) is disposed on one side of the battery bracket (22) of the plurality of battery brackets (22) facing away from the opening (223), the first positioning member (225) is used for limiting the battery (7) to move in the third direction, a middle portion of the battery bracket (22) of the plurality of battery brackets (22) in the first direction is provided with a second positioning member (226), and the second positioning member (226) and the supporting frames (21) jointly restrain the battery (7) from moving in the first direction.

7. The frame structure of any one of claims 1 to 3, wherein at least two flexible fixing members (3) arranged at intervals in a third direction are disposed between two adjacent supporting frames (21), a plurality of through holes (221) are disposed at intervals on a central line of each battery bracket (22) in the third direction, the at least two flexible fixing members (3) are disposed to pass through the plurality of through holes (221) in one-to-one correspondence, the third direction is configured at an included angle relative to the first direction, and the third direction is configured at an included angle relative to the second direction.

8. The frame structure of any one of claims 1 to 3, wherein the outer frame body (1) comprises a bottom frame (12), the bottom frame (12) comprises a first longitudinal beam (121) extending in the first direction and two second longitudinal beams (122) extending in the first direction, the first longitudinal beam (121) and the two second longitudinal beams (122) are disposed at intervals in a third direction, the first longitudinal beam (121) is located between the two second longitudinal beams (122), a plurality of first transverse beams (123) are connected between the first longitudinal beam (121) and each of the two second longitudinal beams (122), and the plurality of first transverse beams (123) are disposed at intervals in the first direction; and
two ends of a supporting frame (21) of the at least two supporting frames (21) are connected to a first transverse beam (123) of the plurality of first transverse beams (123) and the top frame (11), respectively, a first upright post (5) is disposed between two adjacent supporting frames (21) of the at least two supporting frames (21), and two ends of the first upright post (5) are connected to the first longitudinal beam (121) and the top frame (11), respectively.

9. The frame structure of claim 8, wherein the first longitudinal beam (121) comprises a first sub-beam (1211) and a second sub-beam (1212) located above the first sub-beam (1211), the second sub-beam (1212) comprises a body (1212a), two first connection portions (1212b) disposed at intervals in the third direction are disposed on a side of the body (1212a), a second connection portion (1212c) is disposed on each side of two sides of the two first connection portions (1212b) facing away from each other, two second connection portions (1212c) are both connected to the first sub-beam (1211), and the body (1212a) is spaced apart from the first sub-beam (1211).

10. An energy storage system, comprising: a box body (6) and a battery (7) disposed within the box body (6), wherein the box body (6) is provided with the frame structure of any one of claims 1 to 9, and the battery (7) is mounted on the battery rack (2) of the frame structure.
